(19) Europäisches Patentamt
European Patent Office
Office européen des brevets

(11) **EP 2 401 633 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(21) Anmeldenummer: **09801716.3**

(22) Anmeldetag: **28.12.2009**

(51) Int Cl.:
**G01S 13/34** (2006.01)     **G01S 7/40** (2006.01)
**G01S 13/93** (2006.01)

(86) Internationale Anmeldenummer:
**PCT/EP2009/067946**

(87) Internationale Veröffentlichungsnummer:
**WO 2010/097138 (02.09.2010 Gazette 2010/35)**

(54) **FMCW-RADARORTUNGSGERÄT MIT EINRICHTUNG ZUR DETEKTION EINES RADOMBELAGES**

FMCW RADAR LOCATING APPARATUS HAVING A DEVICE FOR DETECTING A RADOME COATING

APPAREIL DE LOCALISATION PAR RADAR FMCW ÉQUIPÉ D'UN DISPOSITIF DE DÉTECTION D'UN REVÊTEMENT DU RADÔME

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.02.2009 DE 102009001231**

(43) Veröffentlichungstag der Anmeldung:
**04.01.2012 Patentblatt 2012/01**

(73) Patentinhaber: **Robert Bosch GmbH**
**70442 Stuttgart (DE)**

(72) Erfinder:
• **HIMMELSTOSS, Armin**
  **71554 Weissach im Tal (DE)**
• **HEILMANN, Stefan**
  **71229 Leonberg (DE)**
• **HAUK, Joachim**
  **71272 Renningen-Malmsheim (DE)**
• **KUEHNLE, Goetz**
  **71282 Hemmingen (DE)**
• **BECHLER, Dirk**
  **76185 Karlsruhe (DE)**

(56) Entgegenhaltungen:
DE-A1- 19 929 794     US-A1- 2002 075 178
US-B1- 7 342 532

EP 2 401 633 B1

**Beschreibung**

Stand der Technik

Die Erfindung betrifft ein FMCW-Radarortungsgerät mit einer durch ein Radom abgedeckten Antenne, einem Mischer zum Mischen eines frequenzmodulierten Sendesignals mit einem von der Antenne empfangenen Signal, einer Einrichtung zum Aufzeichnen des Mischprodukts des Mischers als zeitabhängiges Signal, einer Einrichtung zur Berechnung des Spektrums des zeitabhängigen Signals, und einer Einrichtung zur Detektion eines reflektierenden Belages auf dem Radom.

Ein Radarortungsgerät dieser Art ist aus DE 199 29 794 A1 bekannt.

FMCW-Radarortungsgeräte werden häufig in Fahrerassistenzsystemen für Kraftfahrzeuge eingesetzt, beispielsweise für eine automatische Abstandsregelung oder zur frühzeitigen Erkennung einer Kollisionsgefahr. Das Radom, das die Antenne abdeckt und zumeist durch eine Radarlinse gebildet wird, ist dabei in besonders hohem Maße den Witterungseinflüssen und dem Straßenschmutz ausgesetzt, so daß es leicht zur Bildung eines verlustbehafteten, reflektierenden dielektrischen Belages (Schmutz- oder Wasserfilm) auf der Oberfläche des Radoms kommen kann.

Hierdurch wird die Sende- und Empfangsleistung des Radarsensors beträchtlich reduziert, so daß die Ortungstiefe und Ortungszuverlässigkeit erheblich eingeschränkt wird, bis hin zu völligen Erblindung des Radarsensors. Beispielsweise hat bei einer Radarfrequenz von 76,5 GHz schon ein Wasserfilm mit einer Dicke von 0,3 mm auf dem Radom zur Folge, daß etwa 50 % der ausgestrahlten Leistung an diesem Wasserfilm reflektiert wird und etwa 90 % der Restleistung durch Absorption gedämpft werden.

Aus Gründen der Verkehrssicherheit ist es wesentlich, daß eine Erblindung oder Einschränkung der Funktion des Radarortungsgerätes möglichst unverzüglich festgestellt werden kann.

Das Funktionsprinzip eines FMCW-Radarortungsgerätes (Frequency Modulated Continuos Wave) besteht darin, daß das Radarsignal kontinuierlich ausgesendet wird, jedoch die Frequenz dieses Signals periodisch mit steigenden und fallenden Rampen moduliert wird. Der Mischer mischt einen Teil des Sendesignals mit dem von der Antenne empfangenen Signal und erzeugt so ein Mischprodukt, dessen Frequenz der Differenz zwischen der Frequenz des aktuellen Sendesignals und der Frequenz des empfangen Signals entspricht.

Wenn ein Radarecho von einem georteten Objekt empfangen wird, ist somit die Frequenz des Mischprodukts von der Signallaufzeit und damit vom Abstand des Objekts abhängig, aber aufgrund des Dopplereffektes auch von der Relativgeschwindigkeit des reflektierenden Objekts. Jedes geortete Objekt zeichnet sich deshalb im Spektrum, das aus dem zeitabhängigen Signal, dem Mischprodukt, gebildet wird, auf jeder Modulationsrampe als ein Peak bei der vom Abstand und der Relativgeschwindigkeit abhängigen Frequenz ab. Durch Vergleich der Frequenzlagen von Peaks, die von demselben Objekt stammen, auf Modulationsrampen mit unterschiedlicher Steigung lassen sich dann der Abstand und die Relativgeschwindigkeit des Objekts bestimmen.

Ein reflektierender Belag auf dem Radom kann als "Objekt" betrachtet werden, das die Relativgeschwindigkeit null hat und dessen Abstand dem Abstand zwischen der Antenne und dem Radom entspricht. Dieser Abstand liegt typischerweise in der Größenordnung von etwa 2 - 6 cm, kann allerdings auch größer sein, z. B. wenn der Radarsensor verdeckt im Fahrzeug verbaut ist, etwa hinter einer Stoßstange, die dann das eventuell belagbehaftete Radom bildet. Das Ortungsgerät ist jedoch generell für die Ortung von Objekten ausgelegt, deren Abstand zwischen etwa 0,5 m und etwa 250†m liegt, also um ein Vielfaches größer ist als der Abstand zwischen Antenne und Radom. Wenn der Objektabstand gegen null geht, tendiert bei Relativgeschwindigkeit null auch die Frequenz des zeitabhängigen Signals gegen null, und die Periode dieses Signals wird folglich groß im Verhältnis zur Dauer der Modulationsrampe. Das hat zur Folge, daß solche sehr kleinen Frequenzen oft nicht mit hinreichender Genauigkeit bestimmt werden können. Der Peak, der durch den Radombelag verursacht werden müßte, liegt deshalb bei vielen bekannten Radarortungsgeräten außerhalb des auswertbaren Bereiches des Spektrums und kann somit bei herkömmlichen Radarortungsgeräten nicht zur Detektion des Radombelages genutzt werden.

Aus EP 1 980 874 A2 ist ein Verfahren zur Detektion eines Radombelages bekannt, das darauf basiert, daß das am Radom reflektierte Signal zu einer Verschiebung des Arbeitspunktes des Mischers führt. Durch Vergleich des aktuell gemessenen Mischerarbeitspunktes mit dem Mischerarbeitspunkt bei einem belagfreien Radom läßt sich deshalb ein Radombelag detektieren.

Da jedoch der Mischerarbeitungspunkt für das belagfreie Radom auch von jeweiligen Verbautoleranzen beim Einbau des Radarsensors abhängig ist, muß der Mischerarbeitspunkt aufwendig bei mehreren diskreten Frequenzen innerhalb des zugelassenen Frequenzbereiches vermessen werden. Außerdem wird das Ergebnis dadurch verfälscht, daß der Mischerarbeitspunkt temperaturabhängig ist und auch Alterungseinflüssen unterliegt. Um diese Einflüsse zu mildern, muß deshalb die Mischerarbeitspunkt-Referenzkurve ständig neu gelernt werden, was die Serientauglichkeit des Radarortungsgerätes einschränkt, zumal es schwierig ist, sicherzustellen, daß das Radom auch wirklich belagfrei ist, wenn die Referenzkurve des Mischerarbeitspunktes aufgenommen bzw. gelernt wird.

Offenbarung der Erfindung

Aufgabe der Erfindung ist es, ein FMCW-Radarortungsgerät zu schaffen, das eine einfachere und verläßlichere Detektion eines Radombelages ermöglicht.

Diese Aufgabe wird erfindungsgemäß dadurch gelöst, daß die Einrichtung zur Detektion des reflektierenden Belages dazu ausgebildet ist, das zeitabhängige Signal zu analysieren, eine Sinuskurve mit bekannter Frequenz so an den aufgezeichneten Teil der Kurve anzupassen, die das zeitabhängige Signal repräsentiert, daß ein Höchstmaß an Übereinstimmung erreicht wird, die Amplitude der anpassenden Sinuskurve als Amplitude des zeitabhängigen Signals zu bestimmen, und anhand der Amplitude dieses Signals das Ausmaß der Reflexion am Radom zu bestimmen.

Zur Detektion des Radombelages wird somit nicht wie bei anderen Objekten das Spektrum des zeitabhängigen Signals analysiert, sondern statt dessen das zeitabhängige Signal selbst. Wenn keine anderen Objekte vorhanden sind und nur Reflexionen vom Radom empfangen werden, so ist das als Mischprodukt erhaltene zeitabhängige Signal annähernd ein sinusförmiges Signal mit einer charakteristischen Frequenz, die durch den bekannten Abstand zwischen Antenne und Radom (ca. 6 cm) und durch die Relativgeschwindigkeit null bestimmt und somit bekannt ist. Selbst wenn das für die Auswertung dieses Signals zur Verfügung stehende Zeitfenster, das nicht größer sein kann als die Dauer der Modulationsrampe, deutlich kleiner ist als eine volle Wellenlänge des sinusförmigen Signals, läßt sich, da die Frequenz bekannt ist, aus dem Verlauf dieses Signals innerhalb des Zeitfensters die Amplitude des sinusförmgen Signals bestimmen. Diese Amplitude gibt unmittelbar Auskunft über die Stärke der am Radom auftretenden Reflexion und erlaubt es somit, die Beeinträchtigung der Sende- und Empfangsleistung quantitativ zu bestimmen. Insbesondere kann ein Signal ausgegeben werden, das die Erblindung des Ortungsgerätes anzeigt, wenn die Amplitude einen bestimmten, von der Leistung des von der Antenne emittierten Signals abhängigen Schwellenwert überschreitet.

Wenn zusätzlich Objekte in Abständen von einigen Metern oder mehr geortet werden, führt dies dazu, daß dem ausgewerteten sinusförmigen Signal Frequenzkomponenten überlagert sind, deren Frequenzen mindestens um den Faktor 100 größer sind und somit erforderlichenfalls durch Tiefpaßfilterung eliminiert werden können.

Vorteile der Erfindung

Die Erfindung bietet den Vorteil, daß die Detektion des Radombelages durch direkte Auswertung des zeitabhängigen Signals am Mischerausgang einen vergleichsweise geringen apparativen Aufwand und Rechenaufwand erfordert. Außerdem ist die Anfälligkeit gegenüber Temperaturschwankungen und Alterungseffekten deutlich verbessert, so daß die Blindheitserkennung zuverlässiger und robuster wird. Die Detektion des Radombelages läßt sich bei dem erfindungsgemäßen Ortungsgerät sehr schnell bewerkstelligen, beispielsweise in Zeiträumen von weniger als 1 Sekunde, und ist überdies unabhängig von Verbautoleranzen.

Kurze Beschreibung der Zeichnungen

Ein Ausführungsbeispiel der Erfindung ist in den Zeichnungen dargestellt und in der nachfolgenden Beschreibung näher erläutert.

Es zeigen:

Fig. 1    ein Blockdiagramm eines erfindungsgemäßen Radarortungsgerätes;

Fig. 2    ein Frequenz/Zeit-Diagramm eines Sendesignals des Radarortungsgerätes; und

Fig. 3    ein Elongations/Zeit-Diagramm eines zeitabhängigen Signals, das an einen Mischerausgang in dem Ortungsgerät gewonnen wird.

Ausführungsformen der Erfindung

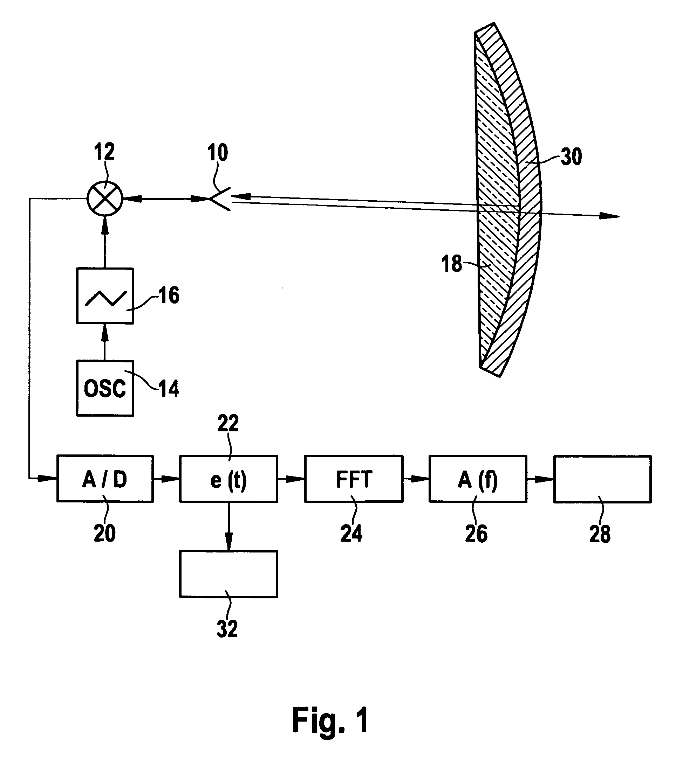

Das in Fig. 1 gezeigte Radarortungsgerät weist eine Antenne 10 auf, der über einen Mischer 12 ein von einem Oszillator 14 erzeugtes und von einem Modulator 16 frequenzmoduliertes Sendesignal zugeführt wird. Das von der Antenne 10 emittierte Signal wird von einer Radarlinse gebündelt, die hier zugleich ein Radom 18 zur Abdeckung der Antenne und damit zum Schutz der Antenne gegen Witterungseinflüsse bildet.

Wenn von dem Radarortungsgerät ein (nicht gezeigtes) Objekt geortet wird, so wird das an dem Objekt reflektierte Signal durch die Linse wieder auf dieselbe Antenne 10 gebündelt, die das Sendesignal emittiert hat (monostatisches Antennenkonzept). Im Mischer 12 wird das empfangene Signal mit einem Anteil des Sendesignals gemischt, und als Mischprodukt erhält man ein zeitabhängiges Signal (Zwischenfrequenzsignal), das in einer Analog/Digital-Wandlerstufe 20 gesamplet und digitalisiert wird. Auf diese Weise erhält man ein zeitabhängiges Signal 22, das den zeitlichen Verlauf der Elongation e(t) des Mischprodukts angibt. In einer Wandlerstufe wird das zeitabhängige Signal 22 beispielsweise durch Schnelle Fourier Transformation (FFT) 24 in ein Spektrum 26 umgewandelt, das die Abhängigkeit der Amplitude des Mischprodukts von der Frequenz f angibt. In einer Auswertungsstufe 28 wird dieses Spektrum weiter ausgewertet, um die Abstände und Relativgeschwindigkeiten der georteten Objekte und - bei einem Mehrstrahlradar - auch deren Azimutwinkel zu bestimmen.

Auf der Oberfläche des Radoms 18 ist in Fig. 1 übertrieben ein Belag 30 dargestellt, beispielsweise ein Wasserfilm oder Schmutzfilm, der einen Teil der von der Antenne 10 emittierten Radarstrahlung reflektiert und einen weiteren Teil der durchgelassenen Radarstrahlung absorbiert. Durch den Belag 30 kann somit die Empfindlichkeit des Radarortungsgerätes beträchtlich herabgesetzt werden, bis hin zur völligen Erblindung.

Das Radarrotungsgerät weist deshalb eine Detektionseinrichtung 32 auf, die es erlaubt, das Vorhandensein des reflektierenden Belages 30 innerhalb kurzer Zeit festzustellen und die Reflektivität dieses Belages quantitativ zu bewerten. Zu diesem Zweck wertet die Detektionseinrichtung 32 das zeitabhängige Signal 22 aus.

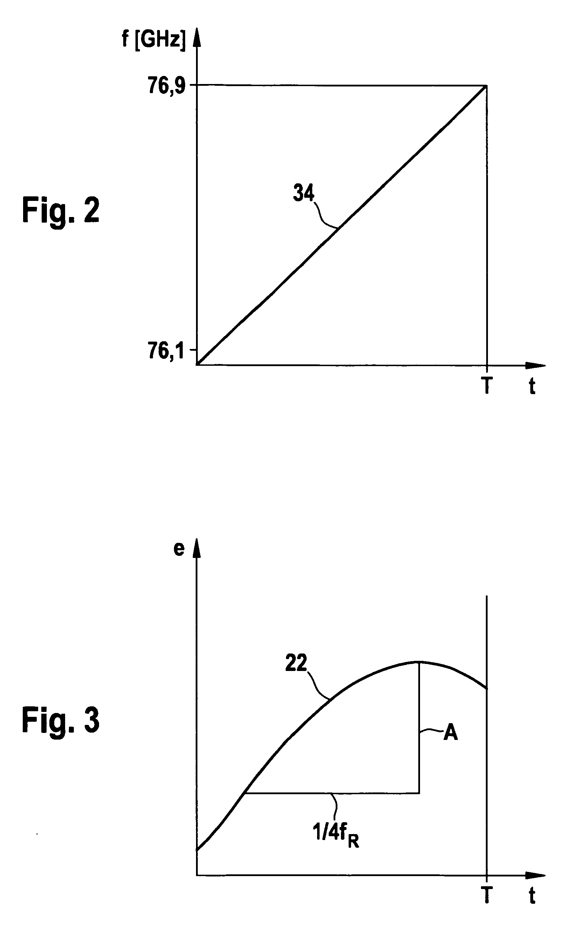

Das Sendesignal wird vom Modulator 16 rampenförmig moduliert, mit einer abwechselnden Folge von steigenden und fallenden Modulationsrampen. In Fig. 2 zeigt die Kurve 34 eine einzelne Modulationsrampe mit der Dauer T und einem Modulationshub von 0,8 GHz.

Wenn das in dieser Weise modulierte Sendesignal im Mischer 12 mit dem am Belag 30 reflektierten Signal gemischt wird, so hat das als Mischprodukt erhaltene zeitabhängige Signal 22 einen sinusförmigen Verlauf, wie er in Fig. 3 gezeigt ist, und seine Frequenz $f_R$ läßt sich nach folgender Formel berechnen:

$$f_R = 2 * d * F / (c * T).$$

Darin ist d der Abstand zwischen der Antenne 10 und der Oberfläche des Radoms 18, auf der sich der Belag 30 befindet, F ist der Modulationshub, T die Modulationsdauer und c die Lichtgeschwindigkeit. Da der Belag 30 gegenüber der Antenne 10 die Relativgeschwindigkeit null hat, enthält die oben angegebene Formel keinen Doppler-Term.

Aufgrund des geringen Abstands zwischen Antenne und Radom ist die Frequenz $f_R$ relativ klein, und ihre Periode $1/f_R$ ist größer als die Modulationsdauer T. Folglich sieht man in Fig. 3 keine vollständige Sinuswelle, sondern nur den Teil einer Sinuswelle. Der Modulationshub F und die Modulationsdauer T sind im gezeigten Beispiel so gewählt, daß dieser Teil etwa 0,32 Perioden des zeitabhängigen Signals entspricht. Vorzugsweise beträgt dieser Teil mindestens 0,125 Perioden.

In dem in Fig. 3 gezeigten Beispiel enthält der sichtbare Teil der Sinuswelle sowohl einen Scheitelpunkt als auch einen Wendepunkt, so daß sich die Amplitude A des zeitabhängigen Signals, die die Reflexionsstärke des Belages 30 angibt, unmittelbar ablesen läßt.

Je nach Phasenlage des zeitabhängigen Signals 22 kann es auch vorkommen, daß der in dem Zeitfenster der Länge T sichtbare Teil keinen Scheitelpunkt oder keinen Wendepunkt enthält. Dennoch ist es selbst bei kleineren Zeitfenstern immer möglich, eine Sinuskurve mit bekannter Frequenz so an den sichtbaren Teil der Kurve anzupassen, daß ein Höchstmaß an Übereinstimmung erreicht wird. Die Amplitude der anpassenden Sinuskurve gibt dann die Amplitude A des zeitabhängigen Signals 22 und damit die Reflektivität des Radombelages an.

Die Amplitude A oder deren Quadrat (entsprechend der reflektierten Leistung) kann als Maß für die Reflexionsstärke des Radombelages benutzt werden, und wenn dieses Maß, ggf. nach geeigneter zeitlicher Filterung, einen bestimmten Schwellenwert übersteigt, gibt die Detektionseinrichtung 32 ein Signal aus, das die Erblindung des Ortungsgerätes anzeigt.

Wenn die von der Antenne 10 emittierte Leistung im Laufe der Zeit variiert wird, ist der Schwellenwert entsprechend anzupassen.

In dem hier beschriebenen Beispiel wurde vereinfachend angenommen, daß nur ein einziges Antennenelement 10 vorhanden ist, das sowohl zum Senden wie auch zum Empfang dient. Bei einem bistatischen Antennenkonzept werden verschiedene Antennenelemente zum Senden und Empfangen benutzt. In dem Fall bilden beide Antennenelemente gemeinsam die "Antenne" im Sinne dieser Anmeldung.

In der Praxis wird das Radarortungsgerät zumeist mehrere nebeneinander angeordnete Antennen aufweisen, deren Strahlung durch die Radarlinse in leicht unterschiedliche Richtungen gebündelt wird, so daß in der Waagrechten ein größerer Ortungsbereich überstrichen wird und auch eine Bestimmung der Azimutwinkel der georteten Objekte ermöglicht wird. Da jedoch die Strahlung jeder einzelnen Antenne durch den Belag 30 auf der Gesamtoberfläche des Radoms beeinflußt wird, genügt es im Prinzip, wenn die Detektionseinrichtung 32 nur das Signal einer einzigen Antenne auswertet. Wahlweise können selbstverständlich die Signale mehrerer oder sämtlicher Antennen ausgewertet werden.

Im hier gezeigten Beispiel greift die Detektionseinrichtung 32 auf das zeitabhängige Signal 22 in digitalisierter Form zu, d. h., das Signal 22 wird durch einen digitalen Datensatz repräsentiert, der mit geeigneter zeitlicher Auflösung die Änderung der Elevation während der Dauer der Modulationsrampe angibt. In einer modifizierten Ausführungsform ist es jedoch auch denkbar, daß die Detektionseinrichtung 32 unmittelbar das analoge Mischprodukt auswertet.

**Patentansprüche**

1. FMCW-Radarortungsgerät mit einer durch ein Radom (18) abgedeckten Antenne (10), einem Mischer (12) zum Mischen eines frequenzmodulierten Sendesignals mit einem von der Antenne (10) empfangenen Signal, einer Einrichtung zum Aufzeichnen des Mischprodukts des Mischers als zeitabhängiges Signal (22), einer Einrichtung (26) zur Berechnung des Spektrums des zeitabhängigen Signals, und einer Einrichtung (32) zur Detektion eines reflektierenden Belages (30) auf dem Radom (18), **dadurch gekennzeichnet, daß** die Einrichtung (32) zur Detektion des reflektierenden Belages (30) dazu ausgebildet ist, das zeitabhängige Signal (22) zu analysieren, eine Sinuskurve mit bekannter Frequenz so an den aufgezeichneten Teil der Kurve anzupassen, die das zeitabhängige Signal repräsentiert, daß ein Höchstmaß an Übereinstimmung erreicht wird, die Amplitude der anpassenden Sinuskurve als Amplitude (A) des zeitabhängigen Signals (22) zu bestimmen, und anhand der Amplitude (A) dieses Signals das Ausmaß der Reflexion am Radom (18) zu bestimmen.

2. Radarortungsgerät nach Anspruch 1, **dadurch gekennzeichnet, daß** die Dauer (T) einer Modulationsrampe des Sendesignals und der Modulationshub (F) dieses Sendesignals so auf den Abstand zwischen der Antenne (10) und dem Radom (18) abgestimmt sind, daß die Periode des zeitabhängigen Signals (22), das durch Reflexion am Belag (30) erhalten wird, höchstens das Achtfache der Modulationsdauer (T) beträgt.

## Claims

1. FMCW radar locating device having an antenna (10) covered by a radome (18), a mixer (12) for mixing a frequency-modulated transmission signal with a signal received by the antenna (10), a device for recording the mixed product of the mixer as a time-dependent signal (22), a device (26) for calculating the spectrum of the time-dependent signal, and a device (32) for detecting a reflecting coating (30) on the radome (18), **characterized in that** the device (32) for detecting the reflecting coating (30) is designed to analyse the time-dependent signal (22), to fit a sinusoidal curve of known frequency to the recorded part of the curve which represents the time-dependent signal in such a way as to achieve a maximum correspondence, to determine the amplitude of the sinusoidal curve to be fitted as the amplitude (A) of the time-dependent signal (22), and to determine the extent of the reflection at the radome (18) with the aid of the amplitude (A) of said signal.

2. Radar locating device according to Claim 1, **characterized in that** the duration (T) of a modulation ramp of the transmission signal and the modulation level (F) of said transmission signal are tuned to the distance between the antenna (10) and the radome (18) such that the period of the time-dependent signal (22) obtained by reflection at the coating (30) is at most eight times the modulation period (T).

## Revendications

1. Appareil de localisation radar FMCW comportant une antenne (10) protégée par un radome (18), un mélangeur (12) destiné à mélanger un signal d'émission modulé en fréquence à un signal reçu par l'antenne (10), un dispositif destiné à enregistrer le produit de mélange du mélangeur sous la forme d'un signal dépendant du temps (22), un dispositif (26) destiné à calculer le spectre du signal dépendant du temps, et un dispositif (32) destiné à détecter un revêtement réfléchissant (30) sur le radome (18), **caractérisé en ce que** le dispositif (32) destiné à détecter le revêtement réfléchissant (30) est conçu de manière à analyser le signal dépendant du temps (22), à ajuster une courbe sinusoïdale de fréquence connue à la partie enregistrée de la courbe qui représente le signal dépendant du temps de telle manière qu'un maximum soit atteint lors d'une concordance, à déterminer l'amplitude de la courbe sinusoïdale ajustée en tant qu'amplitude (A) du signal dépendant du temps (22) et à déterminer sur la base de l'amplitude (A) de ce signal le niveau de réflexion sur le radome (18).

2. Appareil de localisation radar selon la revendication 1, **caractérisé en ce que** la durée (T) d'une rampe de modulation du signal d'émission et l'amplitude de modulation (F) de ce signal d'émission sont ajustées sur la distance entre l'antenne (10) et le radome (18) de telle manière que la période du signal dépendant du temps (22) qui est obtenu par réflexion sur le revêtement (30) soit au plus égale à huit fois la durée de modulation (T).

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19929794 A1
- EP 1980874 A2